# EUROPÄISCHE PATENTSCHRIFT

(11) **EP 2 882 616 B1**
(45) Veröffentlichungstag und Bekanntmachung des Hinweises auf die Patenterteilung: **29.06.2016**
(21) Anmeldenummer: 13737801.4
(22) Anmeldetag: 10.07.2013
(51) Int. Cl.: B60R 25/04

(54) **KRAFTWAGEN MIT VERSCHLÜSSELTEN BUSDATEN**
MOTOR VEHICLE WITH ENCRYPTED BUS DATA
VÉHICULE À MOTEUR DONT LES DONNÉES DU BUS SONT CRYPTÉES

(30) Priorität: 10.08.2012 DE 102012015940
(43) Veröffentlichungstag der Anmeldung: 17.06.2015
(73) Patentinhaber: Audi AG, 85045 Ingolstadt (DE)
(72) Erfinder: BRAHNER, Tom, 85055 Ingolstadt (DE); LEDENDECKER, Ingo, 85114 Buxheim (DE); MAAS, Stephan, 85051 Ingolstadt (DE)
(74) Vertreter: Brandt, Kai
(86) Internationale Anmeldenummer: PCT/EP2013/002027
(87) Internationale Veröffentlichungsnummer: WO 2014/023384

(56) Entgegenhaltungen:
- EP-A1- 2 466 848
- EP-B1- 0 682 609
- WO-A1-2007/019955
- DE-A1- 10 213 658
- FR-A1- 2 687 626

## Beschreibung

Die Erfindung betrifft ein Verfahren zum Betreiben eines Kraftwagens nach dem Oberbegriff von Patentanspruch 1.

Um die Diebstahlsicherheit moderner Kraftwagen zu erhöhen, sind elektronische Wegfahrsperren gesetzlich vorgeschrieben. Solche Wegfahrsperren umfassen ein tragbares Teil, beispielsweise einen Fahrzeugschlüssel, in welchem eine kryptographische Information gespeichert ist und beispielsweise mittels eines Transponders an weitere elektronische Komponenten des Kraftwagens übertragen werden kann. In einer dieser weiteren Komponenten, meist in einem Motorsteuergerät, ist eine weitere kryptographische Information gespeichert. Nur bei Kompatibilität der von der tragbaren Komponente übermittelten Information mit der im Kraftwagen gespeicherten Information wird ein Start des Kraftwagens ermöglicht.

Solche Wegfahresperren können überwunden werden, indem das Motorsteuergerät ausgetauscht und durch eine neues ersetzt wird, welches zu einem Schlüssel mit vorgegebener kryptographischer Information kompatibel ist.

Um eine verbesserte Sicherheit zu schaffen, wird in der DE 10 2010 044 722 A1 vorgeschlagen, fahrzeugseitig eine physikalisch codierte kryptographische Information zu verwenden. Beispielsweise werden hierfür Metallpartikel stochastisch verteilt in Kunststoff vergossen und eine physikalische Eigenschaft, die von der Verteilung der Metallpartikel abhängt, gemessen und dieser Messwert als kryptographische Information verwendet. Um eine einfache Umgehung zu verhindern, wird der Sensormesswert dabei mittels eines Kommunikationsschlüssels verschlüsselt.

Auch solche Wegfahrsperren sind jedoch anfällig gegenüber physikalischem Zugriff, da die relevanten Steuergeräte relativ schnell austauschbar sind.

Es ist somit Aufgabe der vorliegenden Erfindung, ein Verfahren nach dem Oberbegriff von Patentanspruch 1 (wie aus der WO 2007/019955 A bekannt) bereitzustellen, welches einen verbesserten Diebstahlschutz gewährleistet.

Diese Aufgabe wird durch ein Verfahren mit den Merkmalen des Patentanspruchs 1 gelöst.

Bei einem solchen Verfahren zum Betreiben eines Kraftwagens werden zwischen einem Sensor und einem Steuergerät verschlüsselte Daten über einen Bus ausgetauscht, wobei eine zum Entschlüsseln der ausgetauschten Daten notwendige Information mittels einer tragbaren Vorrichtung durch einen Benutzer des Kraftwagens bereitgestellt wird.

Erfindungsgemäß ist dabei vorgesehen, dass die verschlüsselten Daten Messwerte des Sensors umfassen, welche einen Betriebszustand einer Komponente des Kraftwagens betreffen.

Im Unterschied zum bekannten Stand der Technik sind die verschlüsselten Daten somit nicht statisch vorgegeben und vom Betrieb des Kraftwagens unabhängig. Die Verwendung von betriebsrelevanten Sensordaten schützt den Kraftwagen nicht nur beim Start, sondern während des gesamten Betriebs vor unerlaubten Zugriffen und Modifikationen und erschwert zudem kryptographische Angriffe aufgrund der dynamischen Natur der übermittelten Daten, so dass eine besonders sichere Wegfahrsperre geschaffen wird.

Besonders zweckmäßig ist es, als Sensor einen Kurbelwellen-Winkelsensor oder einen Nockenwellen-Winkelsensor zu verwenden. Im Gegensatz zum Motorsteuergerät ist ein Austausch solcher Sensoren äußerst aufwändig und macht die Demontage des gesamten Motors und/oder Getriebes notwendig. Dies bietet einen zusätzlichen Schutz vor physikalischen Angriffen auf die Wegfahrsperre.

Um vor weiteren kryptographischen Angriffen zu schützen, die beispielsweise wiederholte Muster des Sensorsignals ausnutzen, werden die Messwerte des Sensors zusammen mit wenigstens einer weiteren Information, ausgewählt aus einem Zeitgeber-Signal und/oder einer Zufallszahl, erfindungsgemäß verschlüsselt. Auf diese Art können Periodizitäten, die zu kryptographischen Schwachstellen führen könnten, maskiert werden.

In einer besonders bevorzugten Ausführungsform der Erfindung werden alle zwischen an den Bus gekoppelten Komponenten ausgetauschte Daten verschlüsselt. Hierdurch wird eine besonders sichere Wegfahrsperre realisiert, da keinerlei Buskommunikation entschlüsselt werden kann, sofern von der tragbaren Vorrichtung des Fahrers, beispielsweise vom Fahrzeugschlüssel, nicht die korrekte kryptographische Information zur Entschlüsselung bereitgestellt wird. Eine Umgehung eines solchen Systems durch den Austausch von Komponenten ist äußerst aufwändig, da alle essentiellen elektronischen Bauteile des Kraftwagens getauscht werden müssten, um einen Betrieb des Kraftwagens mit einem nicht-authentischen Schlüssel zu ermöglichen.

Vorzugsweise wird zudem zumindest eine Information, welche zur Steuerung eines Aggregats des Kraftwagens notwendig ist, verteilt über mehrere an den Bus gekoppelte Komponenten gespeichert. Eine solche verteilte Speicherung der Information, die nur nach korrekter Entschlüsselung zugänglich ist, macht es Unbefugten noch schwerer, festzustellen, welche Manipulationen sie vornehmen müssten, um Zugriff auf den Kraftwagen zu bekommen.

Dies ist insbesondere der Fall, wenn die Komponenten, über welchen die Information verteilt gespeichert wird, zufällig ausgewählt werden. Eine weitere Erhöhung der Sicherheit kann erzielt werden, indem die Komponenten, über welchen die Information verteilt gespeichert wird, bei Eintreten vorgegebener Bedingungen neu ausgewählt werden. Beispielsweise können die Informationen bei jedem Abstellen des Kraftwagens neu verteilt werden, so dass es unvorhersehbar ist, welche Komponenten für den nächsten Start des Kraftwagens essentiell sind.

Vorzugsweise wird zur Verschlüsselung zur Verschlüsselung ein als sicher bekannter symmetrischer Verschlüsselungsalgorithmus, insbesondere ein AES-Algorithmus verwendet. Das AES-Verfahren bietet gute kryptographische Sicherheit bei relativ geringem Rechenaufwand. Insbesondere bietet sich die Verwendung eines AES-Schlüssels mit zumindest 128 bit Schlüssellänge an.

Die Erfindung betrifft ferner einen Kraftwagen mit zumindest einer an einen Bus gekoppelten Komponente, welcher zur Durchführung eines Verfahrens der oben beschriebenen Art ausgelegt ist. Diese Auslegung bezieht sich insbesondere auf die Rechenkapazität der verwendeten Steuergeräte, die mit hinreichender Leistung zur Durchführung kryptographischer Operationen ausgestattet werden müssen.

Im Folgenden werden die Erfindung und ihre Ausführungsformen anhand der Zeichnung näher erläutert. Es zeigen:
- Fig. 1:: Eine schematische Darstellung eines Kraftwagenmotors mit zugeordneten Sensoren und Steuergeräten;
- Fig. 2:: Eine schematische Darstellung eines Kraftwagenmotors mit zugeordneten Aktoren und Steuergeräten, und
- Fig. 3: Eine schematische Darstellung einer verschlüsselten Datenstruktur zur sicheren Kommunikation über einen Kraftwagenbus.

Ein Motor 10 eines Kraftwagens umfasst eine Kurbelwelle 12, die die translatorische Bewegung der Kolben 14 in eine Rotationsbewegung umsetzt. Über eine Schwungscheibe 16 ist die Kurbelwelle 12 mit einem Getriebe 18 gekoppelt. Über ein formschlüssiges Übertragungselement 20, beispielsweise eine Kette, einen Zahnriemen oder eine Zahnradanordnung, ist die Kurbelwelle 12 mit einer Nockenwelle 22 gekoppelt, die die jeweiligen Zylindern des Motors 10 zugeordneten Ventile 24 des Motors 10 mechanisch ansteuert.

Zur Ansteuerung des Motors 10 ist es notwendig, die rotatorische Position von Kurbelwelle 12 und Nockenwelle 22 genau zu kennen, so dass beispielsweise der jeweilige Zündzeitpunkt für einzelne Zylinder optimiert eingestellt werden kann. Hierfür ist ein Kurbelwellensensor 26, der innerhalb eines Getriebegehäuses 28 angeordnet ist, sowie ein Nockenwellensensor 30, der innerhalb eines Zylinderkopfes 32 angeordnet ist, vorgesehen. Ferner ist zur Ansteuerung ein elektrisches Drosselklappensteller 34 vorgesehen, um die Luft- und Treibstoffmenge, die in die Zylinder gelangt, regulieren zu können.

Die Sensoren 26 und 30 sowie der Drosselklappensteller 34 kommunizieren über Busverbindungen 36 mit einem Motorsteuergerät 38 verbunden, welches wiederum über ein Gateway 40 mit einem CAN-Bus des Kraftwagens kommuniziert.

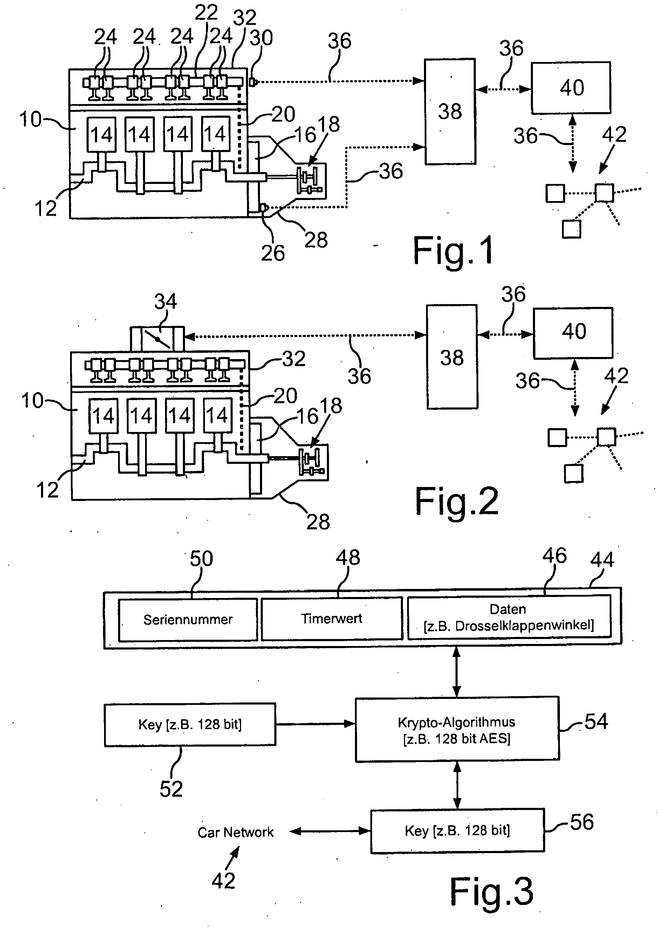

Um eine sichere Kommunikation zwischen den am Bus 42 angeschlossenen Geräten zu ermöglichen und gleichzeitig eine Wegfahrsperren-Funktion zu realisieren, wird die gesamte Buskommunikation verschlüsselt. Fig. 3 zeigt exemplarisch den Aufbau eines Datenpaktes 44 der Buskommunikation. Das Datenpaket 44 umfasst die eigentlichen zu übermittelten Daten 46, beispielsweise einen Messwert der Sensoren 26, 30 oder einen Stellwinkel für den Drosselklappensteller 34. Diese Daten 46 werden zusammen mit einem Zeitgeberwert 48 und einer Seriennummer 50 des sendenden Geräts zum Datenpaket 44 gebündelt. Diese Bündelung erlaubt zum einen eine eindeutige Zuordnung zu einem bestimmten Gerät und Sendezeitpunkt, erschwert zum anderen aber auch die Entschlüsselung des Datenpakets 44 durch Unbefugte, da beispielsweise Periodizitäten in den Daten 46, die einen kryptographischen Angriff erlauben würden, durch die Informationen 48 und 50 maskiert werden.

Unter Verwendung eines 128-bit Schlüssels 52 wird das Datenpaket 44 mittels eines AES-Algorithmus 54 verschlüsselt, bevor es nach den Vorschriften des Transportprotokolls 56 an den Bus 42 übermittelt wird. Alternativ können auch andere als sicher bekannte symmetrische Verschlüsselungsalgorithmen Verwendung finden.

Damit durch diese Verschlüsselung gleichzeitig eine Wegfahrsperrenfunktion realisiert werden kann, besitzen die anderen Busteilnehmer nicht selbst die notwendigen Informationen, um das Datenpaket 44 zu entschlüsseln. Diese Informationen werden vielmehr von einer tragbaren Vorrichtung, beispielsweise einem in einen Fahrzeugschlüssel integrierten Transponder, bereitgestellt. Nur wenn sich der Fahrer des Kraftwagens mittels dieser Vorrichtung authentifizieren kann, ist also überhaupt eine Buskommunikation möglich.

Im Gegensatz zu konventionellen Wegfahrsperren, die oftmals durch den einfachen Austausch des Motorsteuergeräts 38 überwunden werden können, ist das beschriebene System vor physikalischen Angriffen geschützt, da durch die Verschlüsselung der gesamten Buskommunikation jedes einzelne Steuergerät getauscht werden müssten, um es an eine unauthentifizierte kryptographische Information in einem gefälschten Fahrzeugschlüssel anzupassen. Dies ist insbesondere bei unzugänglich verbauten Bauteilen wie den Sensoren 26, 30 nur schwer möglich.

Im Gegensatz zu konventionellen Wegfahrsperren betrifft der Schutz zudem nicht nur den Startvorgang selbst, sondern den gesamten Betrieb des Kraftwagens. Auch ein Anschleppen oder ein sonstiger extern getriebener Startvorgang kann somit effizient unterbunden werden.

Um zusätzliche Sicherheit zu schaffen, können weitere Informationen, die für den Betrieb des Kraftwagens notwendig sind, verteilt über mehrere Busteilnehmer gespeichert werden. Insbesondere wenn sich dieses Verteilungsmuster ändert, ist es für unbefugte Angreifer kaum möglich, überhaupt Angriffspunkte zu identifizieren.

## Patentansprüche

1. Verfahren zum Betreiben eines Kraftwagens, bei welchem zwischen einem Sensor (26, 30) und einem Steuergerät (38) verschlüsselte Daten (44) über einen Bus (36, 42) ausgetauscht werden, wobei eine zum Entschlüsseln der ausgetauschten Daten (44) notwendige Information mittels einer tragbaren Vorrichtung durch einen Benutzer des Kraftwagens bereitgestellt wird, wobei die verschlüsselten Daten (44) Messwerte (46) des Sensors (26, 30) umfassen, welche einen Betriebszustand einer Komponente des Kraftwagens betreffen,
**dadurch gekennzeichnet, dass**
die Messwerte (46) des Sensors (26, 30) zusammen mit wenigstens einer weiteren Information (48, 50), die aus einem Zeitgeber-Signal (48) und/oder einer Zufallszahl ausgewählt wird, gebündelt zu einem Datenpaket verschlüsselt werden.

2. Verfahren nach Anspruch 1,
**dadurch gekennzeichnet, dass**
der Sensor (26, 30) ein Kurbelwellen-Winkelsensor (26) oder ein Nockenwellen-Winkelsensor (30) ist.

3. Verfahren nach einem der Ansprüche 1 bis 2,
**dadurch gekennzeichnet, dass**
alle zwischen an den Bus (42) gekoppelten Komponenten ausgetauschte Daten (44) verschlüsselt werden.

4. Verfahren nach Anspruch 3,
**dadurch gekennzeichnet, dass**
zumindest eine Information, welche zur Steuerung eines Aggregats des Kraftwagens notwendig ist, verteilt über mehrere an den Bus (42) gekoppelte Komponenten gespeichert wird.

5. Verfahren nach Anspruch 4,
**dadurch gekennzeichnet, dass**
die Komponenten, über welchen die Information verteilt gespeichert wird, zufällig ausgewählt werden.

6. Verfahren nach Anspruch 5,
**dadurch gekennzeichnet, dass**
die Komponenten, über welchen die Information verteilt gespeichert wird, bei Eintreten vorgegebener Bedingungen neu ausgewählt werden.

7. Verfahren nach einem der Ansprüche 1 bis 6,
**dadurch gekennzeichnet, dass**
zur Verschlüsselung ein als sicher bekannter symmetrischer Verschlüsselungsalgorithmus, insbesondere ein AES-Algorithmus verwendet wird.

8. Kraftwagen mit einem Sensor (26, 30) und mit einem Steuergerät (38), welche über einen Bus (42) gekoppelt sind, sowie mit zumindest einer an den Bus (42) gekoppelten Komponente, wobei das Steuergerät zur Durchführung eines Verfahrens nach einem der Ansprüche 1 bis 7 ausgelegt ist.

## Claims

1. A method of operating a motor vehicle, in which between a sensor (26, 30) and a control device (38) encrypted data (44) are exchanged via a bus (36, 42), wherein the information necessary for decrypting the exchanged data (44) is provided by means of a portable device by a user of the motor vehicle, wherein the encrypted data (44) comprise measured values (46) of the sensor (26, 30) that relate to the operating state of a component of the motor vehicle, **characterised in that** the measured values (46) of the sensor (26, 30) are bundled encrypted together into a data packet with at least one further information (48, 50), which is selected from a timing signal (48) and/or a random number.

2. The process according to claim 1, **characterised in that** the sensor (26, 30) is a crankshaft angle sensor (26) or a camshaft angle sensor (30).

3. Process according to any one of claims 1 to 2, **characterised in that** all data (44) exchanged between the components coupled to the bus (42) are encrypted.

4. Process according to claim 3, **characterised in that** at least one information which is necessary for the control of a unit of the motor vehicle is stored distributed over several of the components coupled to the bus (42).

5. Process according to claim 4, **characterised in that** the components via which the information is stored distributed are randomly selected.

6. Process according to claim 5, **characterised in that** the components via which the information is stored distributed are reselected on the occurrence of predetermined conditions.

7. Process according to any one of claims 1 to 6, **characterised in that** a safe known symmetric encryption algorithm is used for encryption, particularly an AES algorithm.

8. Motor vehicle with a sensor (26, 30) and a control device (38) which are connected via a bus (42) as well as with at least one component coupled to the bus (42), wherein the control device is designed for performing a process according to any one of claims 1 to 7.

## Revendications

1. Procédé de fonctionnement d'un véhicule automobile, selon lequel des données cryptées (44) sont échangées par l'intermédiaire d'un bus (36, 42) entre un capteur (26, 30) et un appareil de commande (38), une information nécessaire au décryptage des données échangées (44) étant fournie par un utilisateur du véhicule automobile au moyen d'un dispositif portable, les données cryptées (44) comprenant des valeurs mesurées (46) du capteur (26, 30) qui concernent un état de fonctionnement d'un composant du véhicule automobile, **caractérisé en ce que** les valeurs mesurées (46) du capteur (26, 30) sont cryptées conjointement avec au moins une autre information (48, 50), qui est sélectionnée à partir d'un signal d'horloge (48) et/ou d'un nombre aléatoire, et reliées ainsi en un paquet de données.

2. Procédé selon la revendication 1, **caractérisé en ce que** le capteur (26, 30) est un capteur d'angle de vilebrequin (26) ou un capteur d'angle d'arbre à cames (30).

3. Procédé selon l'une des revendications 1 à 2, **caractérisé en ce que** toutes les données (44) échangées entre des composants reliés au bus (42) sont cryptées.

4. Procédé selon la revendication 3, **caractérisé en ce qu'**au moins une information qui est nécessaire à la commande d'un module du véhicule automobile est mémorisée de manière répartie sur plusieurs composants reliés au bus (42).

5. Procédé selon la revendication 4, **caractérisé en ce que** les composants par l'intermédiaire desquels l'information est mémorisée de manière répartie sont choisis au hasard.

6. Procédé selon la revendication 5, **caractérisé en ce que** les composants par l'intermédiaire desquels l'information est mémorisée de manière répartie sont choisis à nouveau lors de l'apparition de conditions prédéterminées.

7. Procédé selon l'une des revendications 1 à 6, **caractérisé en ce que**, pour le cryptage, on utilise un algorithme de cryptage symétrique connu comme sûr, notamment un algorithme AES.

8. Véhicule automobile avec un capteur (26, 30) et avec un appareil de commande (38) qui sont reliés par l'intermédiaire d'un bus (42) ainsi qu'avec au moins un composant relié au bus (42), l'appareil de commande étant conçu pour la mise en oeuvre d'un procédé selon l'une des revendications 1 à 7.
